Europäisches Patentamt

European Patent Office

Office européen des brevets

(11) Veröffentlichungsnummer: **0 293 044**
**A2**

## EUROPÄISCHE PATENTANMELDUNG

(21) Anmeldenummer: 88201024.2

(51) Int. Cl.⁴: **G02B 6/38**

(22) Anmeldetag: 20.05.88

(30) Priorität: 27.05.87 DE 3717811

(43) Veröffentlichungstag der Anmeldung:
30.11.88 Patentblatt 88/48

(84) Benannte Vertragsstaaten:
DE FR GB IT

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB IT**

(72) Erfinder: **Lennartz, Manfred**
**Schubertstrasse 16**
**D-5000 Köln 90(DE)**
Erfinder: **Romberg, Alfons**
**Kronprinzenstrasse 9**
**D-5210 Troisdorf(DE)**

(74) Vertreter: **Koch, Ingo, Dr.-Ing. et al**
**Philips Patentverwaltung GmbH**
**Wendenstrasse 35 Postfach 10 51 49**
**D-2000 Hamburg 1(DE)**

(54) Verfahren zur Herstellung eines optischen Steckverbindungselements.

(57) Die Erfindung betrifft ein Verfahren zur Herstellung eines optischen Steckverbindungselements, bei welchem ein einen Lichtwellenleiter (LWL) umfassender Haltestift derart in einer Steckerhülse justiert wird, daß die optisch wirksame Endfläche des LWL zentrisch zum Außenmantel der Steckerhülse ausgerichtet ist, und bei welchem der Haltestift nach der Justierung mittels den Zwischenraum zwischen Haltestift und Steckerhülse überbrückender Fixierelemente relativ zur Steckerhülse festgelegt wird. Eine bessere koaxiale Ausrichtung der LWL in der Steckerhülse ergibt sich dadurch, daß die Justierung durch auf den Umfang des innerhalb der Steckerhülse liegenden Teils des Haltestifts einwirkende Justierelemente erfolgt.

Fig.1

# Verfahren zur Herstellung eines optischen Steckverbindungselements

Die Erfindung bezieht sich auf ein Verfahren zur Herstellung eines optischen Steckverbindungselements, bei welchem ein einen Lichtwellenleiter (LWL) umfassender Haltestift derart in einer Steckerhülse justiert wird, daß die optisch wirksame Endfläche des LWL zentrisch zum Außenmantel der Steckerhülse ausgerichtet ist, und bei welchem der Haltestift nach der Justierung mittels den Zwischenraum zwischen Haltestift und Steckerhülse überbrückender Fixierelemente relativ zur Steckerhülse festgelegt wird.

Bei einem durch die DE-A-25 42 606 bekannten derartigen Verfahren erfolgt die Justierung durch eine Justiereinrichtung, welche einen außerhalb der Steckerhülse und an derem hinteren Ende befindlichen Längenabschnitt des Haltestiftes aufnimmt. Abgesehen davon, daß ein solcher außerhalb der Steckerhülse befindlicher Längenabschnitt des Haltestifts nicht immer vorhanden ist, besteht bei dem bekannten Verfahren die Gefahr, daß unzulässig große Fehlwinkel der koaxialen Ausrichtung des LWL gegenüber der Außenfläche der Steckerhülse entstehen.

Der Erfindung liegt die Aufgabe zugrunde, das Verfahren der eingangs genannten Art derart zu verbessern, daß es für beliebig ausgebildete Steckverbindungselemente geeignet ist und eine möglichst genaue koaxiale Ausrichtung des LWL in der Steckerhülse gewährleistet.

Die Lösung gelingt dadurch, daß die Justierung durch auf den Umfang des innerhalb der Steckerhülse liegenden Teils des Haltestifts einwirkende Justierelemente erfolgt.

Weil die Justierkräfte beim erfindungsgemäßen Verfahren nahe dem Lichtaustrittsende des LWL angreifen, ist die Gefahr des Entstehens von Winkelfehlern der koaxialen Ausrichtung des LWL wesentlich verringert. Darüberhinaus sind keine außerhalb der Steckerhülse befindlichen Längenabschnitte des Haltestifts erforderlich.

Die Justierelemente können durch Öffnungen der Steckerhülse dringende radial verschiebbare Betätigungsstifte einer die Steckerhülse umfassenden Justiervorrichtung sein. Bei einer nach der DE-A-25 42 606 bekannten Justiervorrichtung dieser Art wird die Lage des LWL derart einjustiert, daß sich ein maximaler Lichtdurchgang zur Justiervorrichtung ergibt.

Bevorzugt werden Justierelemente, welche Bestandteile des Steckverbindungselements sind. Geeignet sind beispielsweise in radialen Gewindelöchern der Steckerhülse geführte Madenschrauben, welche von der Justiervorrichtung gegen die Außenfläche des Haltestiftes bewegt werden. Solche Madenschrauben dienen gleichzeitig als Justierelemente und Fixierelemente. Empfehlenswert ist aber eine zusätzliche Fixierung des Haltestiftes innerhalb der Steckerhülse durch eine in flüssigem Zustand in den Zwischenraum zwischen beiden Teilen eingebrachte und nach der Justierung ausgehärtete Kleberschicht, wie es an sich durch die DE-A-25 42 606 bekannt ist.

Eine besonders gute Koaxialität des LWL zur Außenfläche der Steckerhülse wird dadurch ermöglicht, daß zwei Gruppen von Justierelementen in axial beabstandeten Ebenen auf den Umfang des Haltestiftes einwirken.

Wenn die Gruppen der Justierelemente in gleichem Ausmaß und gekoppelt betätigt werden, bleibt die Koaxialität von Haltestift und Steckerhülse auch beim Justiervorgang stets erhalten.

Wenn andererseits die Gruppen der Justierelemente unterschiedlich und unabhägig voneinander betätigt werden, besteht die Möglichkeit, beispielsweise Winkelfehler der Koaxialität des LWL, die sich möglicherweise bei der Einklebung des LWL in den Haltestift relativ zu dessen Außenfläche ergeben haben, zu korrigieren.

Vorzugsweise werden lediglich kraftschlüssig auf die Haltestifte einwirkende Justierelemente verwendet. Dann müssen wegen der nur in einer Richtung wirksamen Kraftkopplung mindestens drei in einer Ebene symmetrisch auf den Umfang des Haltestiftes einwirkende Justierelemente verwendet werden.

Gemäß einer vorteilhaften Alternativlösung ist es aber statt dessen auch möglich, zwei in einer orthogonalen Ebene in verschiedenen Winkelrichtungen einwirkende Justierelemente zu verwenden, welche den Haltestift entgegen einer Federkraft bewegen können.

Eine bevorzugte Ausführungsart des erfindungsgemäßen Verfahrens ist dadurch gekennzeichnet, daß die Justierelemente elektrisch steuerbare piezokeramische Elemente sind. Diese ermöglichen eine feinstufige und genaue Justierung. Sie können Bestandteile der Justier-vorrichtung sein. Vorzugsweise werden sie jedoch als Teile des Steckverbindungselements ausgebildet.

Insbesondere im letzgenannten Fall ist es vorteilhaft, daß die Bestandteile des Steckverbindungselements bildenden piezokeramischen Elemente durch eine lösbare elektrische Steckverbindung mit einer Justiereinrichtung verbunden sind.

Mit geringem Aufwand ergibt sich eine in zwei hintereinanderliegenden Ebenen erfolgende gleichsinnige Justierverschiebung des Haltestiftes, wenn mindestens zwei sich in Längsrichtung des LWL durch Anlegen einer elektrischen Spannung ausdehnende piezokeramische Justierelemente verwendet werden, deren Längskräfte an mindestens einem Längsende auf konische Anlageflächen des Haltestiftes und/oder der Steckerhülse einwirken. Dabei ist nur eine einzige Gruppe von Justierelementen erforderlich, um eine genaue Parallelverschiebung des Haltestifts zu bewirken.

Die Erfindung und deren Vorteile werden anhand der Zeichnung näher erläutert, in welcher verschiedene vorteilhafte Ausführungsformen von nach dem erfindungsgemäßen Verfahren herstellbaren Steckverbindungselementen schematisch dargestellt sind.

Fig. 1 zeigt einen Längsschnitt gemäß der Linie A-A nach Fig. 2 durch ein Steckverbindungselement, welches durch integrierte Madenschrauben justierbar ist.

Fig. 2 zeigt einen Querschnitt durch das Steckverbindungselement nach Fig. 1 gemäß der Linie B-B.

Fig. 3 zeigt einen Längsschnitt durch ein Steckverbindungselement, welches durch integrierte piezokeramische Biegeelemente justierbar ist.

Fig. 4 zeigt einen Längsschnitt durch ein Steckverbindungselement, welches durch piezokeramische, in Längsrichtung dehnbare Elemente justierbar ist.

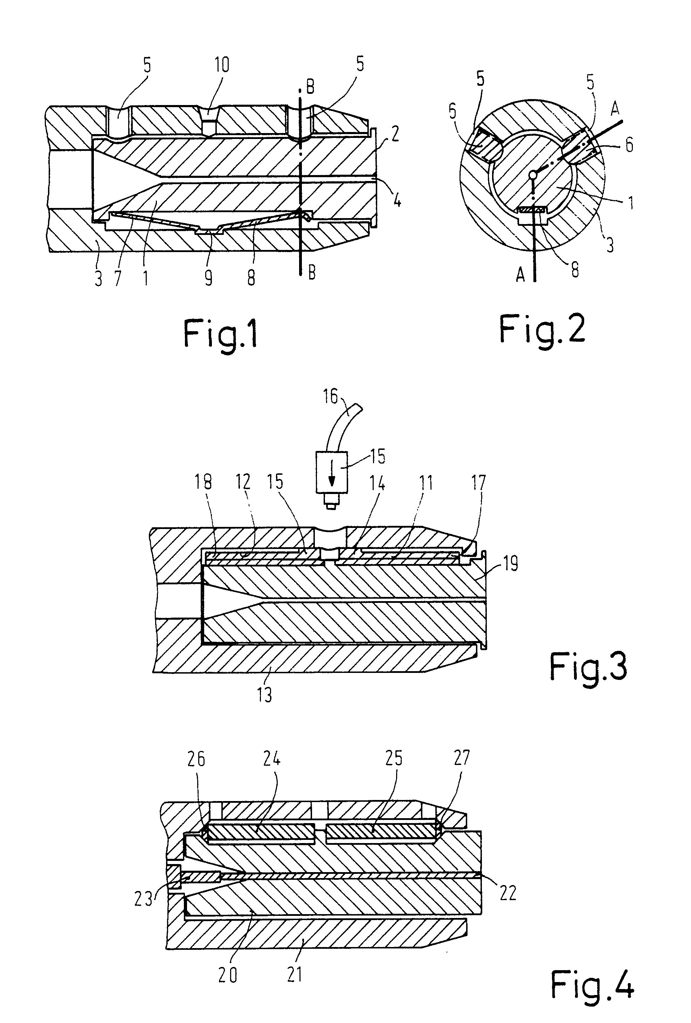

Bei dem in den Figuren 1 und 2 dargestellten Steckverbindungselement ist ein Haltestift 1 vorgesehen, in dessen zentrale Bohrung 4 ein nicht dargestellter LWL eingeklebt wird, so daß er dann bündig mit der Stirnfläche 2 des Haltestifts 1 abschließt.

Der Haltestift 1 muß derart in der Steckerhülse 3 justiert und fixiert werden, daß der LWL koaxial zur Außenfläche der Steckerhülse 3 zentriert ist. Dazu wird die Steckerhülse 3 mitsamt des den LWL tragenden Haltestifts 1 in die Aufnahme einer nicht dargestellten Justiereinrichtung eingesetzt, welche ähnlich der in der DE-A-25 42 606 beschriebenen Weise aufgebaut sein kann.

In die Gewindebohrungen 5, von welchen je zwei mit einem Winkelversatz von 120° in in Längsrichtung des Haltestifts 2 hintereinanderliegenden Ebenen vorgesehen sind, werden gegen den Haltestift 1 drückende Madenschrauben 6 als Justierelemente eingefügt. Durch nicht dargestellte Betätigungselemente einer ebenfalls nicht dargestellten Justiereinrichtung können die Madenschrauben gedreht und damit in radialer Richtung bewegt werden.

Durch jeweils einen Federarm 7 bzw. 8 einer besonders einfach aufgebauten zweiarmigen, sich im mittleren Bereich 9 gegen die Innenwandung der Steckerhülse 3 abstützenden Biegefeder wird der Haltestift 1 gegen die Enden der Madenschrauben 5 gedrückt.

Wenn in Längsrichtung in einer Flucht hintereinanderliegende Madenschrauben gleichsinnig um gleiche Drehwinkel von der Justiereinrichtung betätigt werden, ergibt sich eine Parallelverschiebung des Haltestifts 1. Eine koaxiale Ausrichtung des LWL relativ zur Außenfläche der Steckerhülse 3 wird dann beibehalten.

Durch unterschiedlich starke Drehung der in einer Flucht hintereinanderliegenden Madenschrauben läßt sich auch die Winkelausrichtung des LWL nachjustieren. Das ist beispielsweise dann vorteilhaft, wenn durch das Einkleben des LWL in den Haltestift 1 keine genügend genaue koaxiale Ausrichtung des LWL zur Außenfläche des Haltestifts 1 erreicht wurde.

Zur besonders sicheren Fixierung der einjustierten Lage des Haltestifts 1 ist es vorteilhaft, durch den Einfülltrichter 10 beispielsweise flüssiges Gießharz einzufüllen, welches in die Zwischenräume zwischen dem Haltestift 1 und der Steckerhülse 3 fließt und dort aushärtet. Die Madenschrauben 6 können auch nach erfolgter Fixierung durch das Gießharz Bestandteile des Steckverbindungselements bleiben.

Für problemlose Fälle, bei welchen es nicht auf eine extreme Genauigkeit der koaxialen Ausrichtung des LWL zur Außenfläche der Steckerhülse 3 ankommt, genügen in einer einzigen mittleren orthogonalen Ebene des Haltestifts angreifende Justierelemente.

Beim in Figur 3 dargestellten Steckverbindungselement sind piezokeramische Biegeelemente 11 und 12 als integrierte elektrisch steuerbare Justierelemente paarweise vorgesehen. Drei solcher Paare sind symmetrisch verteilt am Innenumfang der Steckerhülse 13 mit ihren einander zugewandten Enden 14 und 15 befestigt. Diese piezokeramischen Biegeelemente 11 und 12 werden mittels eines elektrischen Mehrfachsteckers 15, welcher durch die Wandung der Steckerhülse 13 steckbar ist, an die Steuerleitung 16 einer nicht dargestellten Justiereinrichtung angeschlossen.

Die freien Enden 17 und 18 der Biegeelemente 11 und 12 liegen am Haltestift 19 an. Durch eine entsprechende, von der Justiervorrichtung bewirkte elektrische Ansteuerung kann ähnlich wie mit den Madenschrauben nach Figur 2 eine Justierung des Haltestifts 9 erfolgen. Dabei könnte gleichfalls wie bei der Lösung nach den Figuren 1 und 2 ein Paar der piezokeramischen Biegeelemente durch eine Federanordnung der in Figur 1 gezeigten Art ersetzt werden.

Die Biegeelemente 11 und 12 können gleich stark erregt werden, so daß sich eine Parallelverschiebung des Haltestifts 19 ergibt. Sie können aber auch mit unterschiedlichen Spannungen gesteuert werden, wodurch eine Änderung der Winkellage des Haltestifts 19 möglich ist.

Wenn ausschließlich eine Parallelverschiebung erforderlich ist, kann statt jedes Paares von Biegeelementen ein einziges Biegeelement verwendet
werden, welches sich dann ähnlich wie die doppelarmige Feder nach Figur 1 im mittleren Bereich an
der Innenwandung der Steckerhülse 13 abstützt
und mit seinen äußeren Enden in gleichem Ausmaß gegen den Haltestift 19 drückt und deshalb
dort gleiche Auslenkungen bewirkt. Bei der in Figur
3 dargestellten Anordnung ist eine Ausfüllung des
Zwischenraums zwischen dem Haltestift 9 und der
Steckerhülse 19, beispielsweise mit Gießharz, unbedingt erforderlich. Das Gießharz muß ausgehärtet
sein, bevor die für eine optimale Justierung erforderlichen elektrischen Spannungen der Biegeelemente abgeschaltet werden.

Bei der in Figur 4 dargestellten Anordnung
werden die Steckerhülse 21 und der zugehörige
Haltestift 20, in dessen Bohrung ein dort vom Coating 23 befreiter LWL 22 eingeklebt ist, durch mindestens zwei Paare piezokeramischer Dehnungselemente 24 und 25 einjustiert. Wenn an diese
durch eine nicht dargestellte Justiereinrichtung vorgegebene elektrische Spannungen angelegt werden, dehnen sie sich in Längsrichtung aus. Über
Keilstücke 26 bzw. 27, welche sich gegen korrespondierende konische Flächen des Haltestifts 20
und der Steckerhülse 21 abstützen, wird die
Längsbewegung der Dehnungselemente 24 und 25
eines jeden Paares jeweils in gleich starke
Radialverschiebungen des Haltestifts 20 umgewandelt. Im Beispiel der Figur 4 sind die Biegeelemente deshalb paarweise und folglich doppelt vorgesehen, damit eine größere resultierende Längenausdehnung erreichbar ist.

Auch bei der Anordnung nach Figur 4 muß der
Zwischenraum zwischen dem Haltestift 20 und der
Steckerhülse 21 beispielsweise durch ausgehärtetes Gießharz gefüllt sein, bevor die an die Biegelemente gelegten elektrischen Spannungen abgeschaltet werden.

**Ansprüche**

1. Verfahren zur Herstellung eines optischen
Steckverbindungselements, bei welchem ein einen
Lichtwellenleiter (LWL) umfassender Haltestift
derart in einer Steckerhülse justiert wird, daß die
optisch wirksame Endfläche des LWL zentrisch
zum Außenmantel der Steckerhülse ausgerichtet
ist, und bei welchem der Haltestift nach der Justierung mittels den Zwischenraum zwischen Haltestift
und Steckerhülse überbrückender Fixierelemente
relativ zur Steckerhülse festgelegt wird, dadurch
gekennzeichnet, daß die Justierung durch auf den
Umfang des innerhalb der Steckerhülse liegenden
Teils des Haltestifts einwirkende Justierelemente
erfolgt.

2. Verfahren nach Anspruch 1,
gekennzeichnet durch die Verwendung von Justierelementen, welche Bestandteile des Steckverbindungselements sind.

3. Verfahren nach Anspruch 1 oder 2,
dadurch gekennzeichnet, daß zwei Gruppen von
Justierelementen in axial beabstandeten Ebenen
auf den Umfang des Haltestifts einwirken.

4. Verfahren nach Anspruch 3,
dadurch gekennzeichnet, daß die Gruppen der Justierelemente in gleichem Ausmaß und gekoppelt
betätigt werden.

5. Verfahren nach Anspruch 3,
dadurch gekennzeichnet, daß die Gruppen der Justierelemente zur Justierung der koaxialen Ausrichtung des LWL in der Steckerhülse unterschiedlich
und unabhängig voneinander betätigt werden.

6. Verfahren nach einem der Ansprüche 1 bis
5,
gekennzeichnet durch die Verwendung von lediglich kraftschlüssig auf den Haltestift einwirkenden
Justierelementen.

7. Verfahren nach Anspruch 6,
gekennzeichnet durch die Verwendung von zwei in
einer orthogonalen Ebene und unter verschiedenem Winkel einwirkende Justierelemente,
welche den Haltestift entgegen eine Federkraft bewegen können.

8. Verfahren nach einem der Ansprüche 1 bis
7,
dadurch gekennzeichnet, daß die Justierelemente
elektrisch steuerbare piezokeramische Elemente
sind.

9. Verfahren nach Anspruch 8,
dadurch gekennzeichnet, daß Bestandteile des
Steckverbindungselements bildende piezokeramische Elemente durch eine lösbare elektrische
Steckverbindung mit einer Justiereinrichtung verbunden werden.

10. Verfahren nach einem der Ansprüche 2 bis
9,
gekennzeichnet durch die Verwendung von mindestens zwei sich in Längsrichtung des LWL gegenüberliegenden, durch Anlage einer elektrischen
Spannung ausdehnenden piezokeramische Justierelemente, deren Längskräfte an mindestens einem
Längsende auf konische Anlageflächen des Haltestifts und/oder der Steckerhülse einwirken.

## Fig.1

## Fig.2

## Fig.3

## Fig.4